# EUROPÄISCHE PATENTSCHRIFT

(11) **EP 2 783 234 B1**
(45) Veröffentlichungstag und Bekanntmachung des Hinweises auf die Patenterteilung: **23.03.2022**
(21) Anmeldenummer: 12824795.4
(22) Anmeldetag: 21.11.2012
(51) Int. Cl.: G01S 13/22, G01S 13/93, G01S 7/02

(54) **VERFAHREN ZUR BESTIMMUNG WENIGSTENS EINES PARAMETERS ZUR KORRELATION ZWEIER OBJEKTE**
METHOD FOR DETERMINING AT LEAST ONE PARAMETER FOR CORRELATING TWO OBJECTS
PROCÉDÉ DE DÉTERMINATION D'AU MOINS UN PARAMÈTRE AUX FINS DE CORRÉLATION DE DEUX OBJETS

(30) Priorität: 24.11.2011 DE 102011055674
(43) Veröffentlichungstag der Anmeldung: 01.10.2014
(73) Patentinhaber: HELLA GmbH & Co. KGaA, 59552 Lippstadt (DE)
(72) Erfinder: VON RHEIN, Andreas, 33154 Salzkotten (DE)
(86) Internationale Anmeldenummer: PCT/EP2012/073192
(87) Internationale Veröffentlichungsnummer: WO 2013/076122

(56) Entgegenhaltungen:
- EP-A2- 1 235 079
- EP-A2- 1 457 789
- WO-A2-01/01166
- DE-T2- 3 887 745
- US-A- 6 121 915
- NAKAYAMA Y ET AL: "Novel variable spreading sequence length system for improving the processing speed of DS-UWB radar", ITS TELECOMMUNICATIONS, 2008. ITST 2008. 8TH INTERNATIONAL CONFERENCE ON, IEEE, PISCATAWAY, NJ, USA, 24. Oktober 2008 (2008-10-24), Seiten 357-361, XP031402775, ISBN: 978-1-4244-2857-1
- SEUNG GOO KANG ET AL: "A distance measuring scheme based on repeated use of PN sequence", COMMUNICATIONS (APCC), 2011 17TH ASIA-PACIFIC CONFERENCE ON, IEEE, 2. Oktober 2011 (2011-10-02), Seiten 872-874, XP032116081, DOI: 10.1109/APCC.2011.6152931 ISBN: 978-1-4577-0389-8

## Beschreibung

Die vorliegende Erfindung betrifft ein Verfahren zur Bestimmung wenigstens eines Parameters zur Korrelation zweier Objekte sowie eine Vorrichtung zur Durchführung eines solchen Verfahrens.

Verfahren zur Bestimmung wenigstens eines Parameters zur Korrelation zweier Objekte sind grundsätzlich bekannt und kommen heutzutage häufig in Fahrzeugen zum Einsatz, um Abstände zu anderen Fahrzeugen und umgebenden Objekten zu ermitteln. Beispielsweise sind Verfahren bekannt, um eine so genannte Spurwechselassistenz zur Verfügung zu stellen. Dabei wird mit Hilfe von Radarsignalen eine Überwachung von Nebenspuren durchgeführt, und auf diese Weise das Annähern von Fahrzeugen auf der Nebenfahrbahn detektiert. Wünscht ein Fahrer einen Fahrspurwechsel durchzuführen, so kann beispielsweise mit Hilfe von Lichtsignalen, eine Warnung an den Fahrer weitergegeben werden, wenn die Nachbarspur nicht frei ist.

Nachteilhaft bei bekannten Verfahren zur Bestimmung von Parametern zur Korrelation zweier Objekte ist es, dass insbesondere bei Verwendung von elektromagnetischen Signalen in Form von Radarpulsen eine Störanfälligkeit besteht. Diese Störanfälligkeit ist insbesondere auf Störsender bzw. Störquellen zurückzuführen, die innerhalb des Fahrzeuges oder außerhalb des Fahrzeuges angeordnet sind. Zum Beispiel ist es möglich, dass Netzgeräte eines Fahrzeuges oder in der Umgebung eines Fahrzeuges befindliche Funkmasten Störsignale erzeugen, die von dem Bestimmungsverfahren fälschlicherweise als Objekt wahrgenommen werden. In einem solchen Fall würde eine Fehlwarnung durchgeführt, also der Fahrer beim Spurwechsel gewarnt, obwohl kein Fahrzeug auf der Nachbarfahrbahn vorbeifährt. Dies führt zu einer verringerten Akzeptanz solcher Systeme bei der Verwendung durch den Fahrer eines Fahrzeuges. Solche grundsätzlichen Systeme sind zum Beispiel in der DE 10 2008 046 387 A1 als Radar mit einer Äquivalenzzeitabtastung bekannt.

Aus der Patentschrift DE 3887 745 T2, 28. Juli 1994, ist zudem ein Radargerät unter Verwendung verschiedener Arten von Impulsen bekannt, bei dem abwechselnd Gruppen von acht langen Impulsen und Gruppen von acht kurzen Impulsen generiert und ausgesendet werden.

Es ist Aufgabe der vorliegenden Erfindung, die voranstehend beschriebenen Nachteile bekannter Verfahrensvorrichtungen zumindest teilweise zu beheben. Insbesondere ist es Aufgabe der vorliegenden Erfindung ein Verfahren zur Bestimmung wenigstens eines Parameters zur Korrelation zweier Objekte sowie eine entsprechende Vorrichtung zur Verfügung zu stellen, die in kostengünstiger und baulich einfacher Weise eine Störanfälligkeit bei der Bestimmung des wenigstens einen Parameters reduziert.

Voranstehende Aufgabe wird gelöst durch ein Verfahren mit den Merkmalen des Anspruchs 1 sowie durch eine Vorrichtung mit den Merkmalen des Anspruchs 6.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung und jeweils umgekehrt, so dass bezüglich der Offenbarung zu den einzelnen Erfindungsaspekten stets wechselseitig Bezug genommen wird bzw. werden kann. Ein erfindungsgemäßes Verfahren dient zur Bestimmung wenigstens eines Parameters zur Korrelation zweier Objekte. Dieser Parameter ist insbesondere der Abstand und/oder die Relativgeschwindigkeit und/oder von Relativwinkeln der zwei Objekte. Dabei findet ein solches Verfahren zum Beispiel Einsatz bei der Überwachung einer Nachbarfahrbahn für ein Fahrzeug. Bei einem erfindungsgemäßen Verfahren wird eine Mehrzahl von aufeinanderfolgenden Sendepulsfolgen mit jeweils mindestens einem Sendepuls eines elektromagnetischen Signals ausgesendet, so dass sich eine Reihe von Sendepulsfolgen ausbildet. Dabei kann dem Senden eines Sendepulses vorzugsweise eine Abtastung des Empfangssignals folgen. Der Takt des Abtastens entspricht dabei vorzugsweise dem Sendetakt, so dass die Abtastdauer im Wesentlichen gleich der Sendedauer ist. Das elektromagnetische Signal ist im Rahmen der vorliegenden Erfindung insbesondere ein Radarsignal. Die dabei verwendeten Frequenzen sind insbesondere im Bereich der Hochfrequenz, zum Beispiel bei 24GHz. Im Empfangszweig wird diese Hochfrequenz heruntergemischt und damit die resultierende Differenzfrequenz mit einem Tiefpass auf 100kHz begrenzt. Einzelne Zeitsignale können dabei mit 40 kHz abgetastet werden. Bei der Verwendung von beispielsweise drei verschachtelten Folgen als A-, B- und C- Folge sinkt dabei die effektive Abtastrate für eine Folge auf ca. 40 kHz / 3, also 13,333 kHz.

Unter einem Sendepuls ist im Rahmen der vorliegenden Erfindung eine Sendedauer zu verstehen, über welche im Wesentlichen konstant ein elektromagnetisches Signal einer konstanten oder einer sich verändernden Frequenz ausgesendet wird. Diese Sendedauer liegt vorzugsweise in einem Bereich der Mikrosekunden andauert, insbesondere im Bereich um 25 Mikrosekunden. Jede Sendepulsfolge weist zumindest einen solchen Sendepuls auf, wobei es bevorzugt ist zwei oder mehr Sendepulse zu einer Sendepulsfolge zusammenzufassen. Üblicherweise bezeichnet man einen einzelnen Sendepuls mit einem Großbuchstaben, so dass zum Beispiel eine Sendepulsfolge aus drei einzelnen Sendepulsen als A, B und C bezeichnet werden kann. Alle Sendepulsfolgen zusammen werden kontinuierlich aufeinander folgend wiederholt, so dass sich daraus eine Reihe von aufeinander folgenden Sendepulsfolgen ausbildet.

Ein erfindungsgemäßes Verfahren zeichnet sich dadurch aus, dass die Sendedauer der einzelnen Sendepulse von Sendepulsfolge zu Sendepulsfolge variiert wird, um die Störanfälligkeit bei der Auswertung des Verfahrens zu reduzieren. Mit anderen Worten erfolgt eine Variation der exakten Sendedauer der einzelnen Sendepulse innerhalb einer Sendepulsfolge. Wird eine erste Sendepulsfolge ausgesendet, so findet eine Variation der Sendepulse dahingehend statt, dass alle Sendepulse dieser einzelnen ersten Sendepulsfolge die gleiche Sendedauer aufweisen. Anschließend wird variiert, so dass die Sendepulse der nachfolgenden Sendepulsfolge in dieser Reihe ebenfalls untereinander wieder die gleiche Sendedauer aufweisen, welche sich jedoch von der Sendedauer der Sendepulse der ersten Sendepulsfolge unterscheidet.

Die voranstehend beschriebene Variation durch ein erfindungsgemäßes Verfahren kann auch als bewusste Unschärfe bei der Abtastung mit Hilfe elektromagnetischer Signale verstanden werden. Damit steht sie im Gegensatz zu dem üblichen Bestreben des Fachmanns möglichst exakte Abtastungen und möglichst scharfe Frequenzsignalergebnisse zu erzielen. Durch die Variation der Sendedauer wird also eine Unschärfe erzielt, die auch als so genannter "Jitter" bezeichnet wird. Dieser Jitter führt dazu, dass das Ergebnis bei der Auswertung der reflektierten elektromagnetischen Signale, also bei den empfangenen rückkehrenden Signalen, bei einem erfindungsgemäßen Verfahren leicht verrauscht ist. Dies führt dazu, dass zwar einerseits die Exaktheit bei der Auswertung eines erfindungsgemäßen Verfahrens reduziert wird, jedoch gleichzeitig einzelne, besonders stark ausfallende Störpeaks durch das Rauschen im Wesentlichen vollständig unterdrückt bzw. verwischt werden. Damit können Störpeaks, wie sie zum Beispiel durch elektromagnetische Störsignale im Bereich für die Bestimmung eines Parameters zur Korrelation zweier Objekte vorkommen, sozusagen verschwimmen. Ein aktives Herausfiltern bzw. ein aktives Interpretieren solcher Störsignale ist nicht mehr notwendig. Damit kann nicht nur die Auswertung eines solchen Verfahrens verbessert und hinsichtlich des Aufwandes reduziert wird, sondern auch das Versehen eines Filters für das Herausfiltern solcher Störsignale unterbleiben. Weiter ist darauf hinzuweisen, dass insbesondere bei konstantem Jitter innerhalb einer Sendepulsfolge, die Phasenlage zwischen der entschachtelten A-Reihe und z.B. der entschachtelten B-Reihe nicht verrauscht ist. Somit kann die durch den Jitter erzeugte Unschärfe wieder zumindest teilweise reduziert werden.

Die Reihe von Sendepulsfolgen bei einem erfindungsgemäßen Verfahren ist dabei vorzugsweise auf zum Beispiel 512 einzelne Sendepulsfolgen bezogen. Dabei kann eine Sendepulsfolge selbstverständlich auch in einer Reihe angewendet werden, die länger oder kürzer ist. Auch kann sich eine Reihe von Sendepulsfolgen ebenfalls wiederum periodisch wiederholen.

Im Rahmen der vorliegenden Erfindung kann die Variation der Sendedauer in unterschiedlichster Weise durchgeführt werden. Insbesondere ist eine Zufallsvariation oder eine vorgegeben Variation der Sendedauer vorteilhaft.

Ein erfindungsgemäßes Verfahren kann dadurch weitergebildet sein, dass jede Sendepulsfolge die gleiche Anzahl von Sendepulsen aufweist. Das bedeutet, dass keine Variation der Anzahl der Sendepulse über die Sendepulsfolgen hinaus erfolgt. Wird also eine Sendepulsfolge mit beispielsweise drei Sendepulsen A, B und C ausgeführt, so weisen alle Sendepulsfolgen diese Variation auf. Dadurch ist es möglich, dass eine noch einfachere Regelung bzw. Steuerung bei der Ausführung eines erfindungsgemäßen Verfahrens möglich wird. Dabei können die einzelnen Sendepulse auf gleicher Frequenz ausgebildet sein oder aber auch einen Frequenzshift aufweisen. Das bedeutet, dass die einzelnen Sendepulse insbesondere auf unterschiedlichen Frequenzen durchgeführt werden, wobei der Frequenzshift für alle Sendepulsfolgen identisch oder im Wesentlichen identisch ist. Durch einen Frequenzshift und darüber hinaus durch das Vorsehen von zumindest zwei Sendepulsfolgen kann die Exaktheit für die Bestimmung eines Parameters zur Korrelation zweier Objekte noch weiter erhöht werden. Insbesondere muss nicht auf Plausibilitätsprüfung zurückgegriffen werden, sondern es kann vielmehr eine Berechnung beispielsweise des Abstandes und/oder der Relativgeschwindigkeit der zwei Objekte durchgeführt werden.

Es ist auch vorteilhaft, dass bei dem beanspruchten erfindungsgemäßen Verfahren jede Sendepulsfolge wenigstens zwei Sendepulse aufweist. Dabei sind vorzugsweise drei oder sogar noch mehr Sendepulse vorgesehen. Durch eine derartige Ausbildung wird, wie voranstehend erläutert, eine exakte Berechnung der Parameter Abstand und/oder Geschwindigkeit möglich. Bei einem einzigen Puls muss dies durch eine Abschätzung durchgeführt werden.

Ein weiterer Vorteil der Erfindung ist, dass bei dem beanspruchten erfindungsgemäßen Verfahren die Variation der Sendedauer durch Addition einer variierten Zusatzdauer zu einer festen Basisdauer erzeugt wird. Die feste Basisdauer kann dabei insbesondere für alle Sendepulsfolgen und auch für alle einzelnen Sendepulse identisch sein. Für die Steuerung bzw. Regelung bei einem erfindungsgemäßen Verfahren ist dies hinsichtlich einer verringerten Komplexität von großem Vorteil. Die Addition der variierten Zusatzdauer führt dazu, dass nur dieser Teil der Sendedauer variiert werden muss, und damit auch bei einer Fehlfunktion, also bei einem Mangel an der Variation der Zusatzdauer, das erfindungsgemäße Verfahren trotzdem noch zumindest im suboptimalen Bereich durchgeführt werden kann.

Ebenfalls vorteilhaft ist es, wenn bei einem erfindungsgemäßen Verfahren die Zusatzdauer mit Hilfe eines Zufallsgenerators, insbesondere zwischen vorgegebenen Grenzen, variiert wird. Die vorgegebenen Grenzen für die Zusatzdauer sind dabei zum Beispiel der Bereich zwischen +/- 0,2 Mikrosekunden. Dies kann dazu führen, dass die Grenzen insbesondere im Bereich zwischen +/- 10 %, vorzugsweise im Bereich zwischen +/- 1 % der Basisdauer der Sendedauer eines Sendepulses liegen. Die Zufallsgeneratoren können zum Beispiel durch ein weißen Rauschen, ein violettes Rauschen, ein MASH-Verfahren, ein mehrstufiger Sigma-Delta-Modulator oder weitere bekannte Zufallsgeneratormechanismen zur Verfügung gestellt werden. Das Verwenden eines Zufallsgenerators führt dazu, dass eine Regelmäßigkeit der Variation mit großer Wahrscheinlichkeit unterbleibt. Das Vermeiden einer Regelmäßigkeit bei der Variation der Sendedauer führt dazu, dass in gewünschter Weise die Variation der Sendedauer zu einem Unterdrücken bzw. einem Verwischen von unerwünschten Störpeaks führt.

Ebenfalls vorteilhaft ist es, wenn bei einem erfindungsgemäßen Verfahren die Zusatzdauer über ein vorgegebenes Variationsprofil, insbesondere zwischen vorgegebenen Grenzen, variiert wird. Diese Variante kann selbstverständlich auch alternativ oder in Kombination mit der Verwendung eines Zufallsgenerators eingesetzt werden. Das Vorgeben eines Variationsprofils ist dabei vorzugsweise derart ausgebildet, dass es in nichtsymmetrischer Weise ein Rauschen für das Verfahren zur Verfügung stellt. Das Vorgeben eines oder sogar mehrere Variationsprofile kann dazu dienen, das Verfahren auf bestimmte Störsignale zu optimieren. So können je nach aktueller Fahrsituation die Variationsprofile an die aktuelle Fahrsituation angepasst werden, so dass die wahrscheinlichsten Störsignale durch das entsprechend ausgewählte Variationsprofil durch ein erfindungsgemäßes Verfahren mit hoher Wahrscheinlichkeit verwischt werden. Dies reduziert die Regelaufwendung noch weiter und erspart darüber hinaus die aktive Variation der Zusatzdauer.

Ein weiterer Vorteil kann es sein, wenn bei einem erfindungsgemäßen Verfahren die Art der Variation der Sendedauer der einzelnen Sendepulse nach einer Mehrzahl von Reihen von Sendefolgen verändert wird. Dies kann zum Beispiel nach 500 Reihen und/oder nach mehr als 5 Sekunden durchgeführt werden. Dabei kann es sein, dass zum Beispiel ein anderer Zufallsgenerator ausgewählt wird oder beim Vorgeben von Variationsprofilen, also sogenannten Jitter Profilen, ein anderes Profil der Variation zugrunde gelegt wird. Damit ist es möglich, dass eine Anpassung an unterschiedliche Störsignale erfolgt. Auch wird es auf diese Weise möglich, zeitlich nachgeschaltet eine Adaption an unterschiedliche Störsignale durchzuführen, so dass innerhalb einer vertretbaren Zeitdauer von zum Beispiel 10, 15 oder 20 Sekunden, eine Abtastung auf unterschiedlichste Störsignale bzw. eine Optimierung mit Bezug auf unterschiedlichste Störsignale, erfolgen kann.

Ebenfalls vorteilhaft ist es, wenn bei einem nicht beanspruchten Verfahren die Variation der Sendedauer durch eine Variation einer Abtastfrequenz für die einzelnen Sendepulse erzeugt wird. Dies führt zu einer besonders universellen Ausführungsform des erfindungsgemäßen Verfahrens, für die jedoch ein relativ tiefer Eingriff in die Regelung der Sendepulsvariation notwendig ist. Dafür wird hier eine im Wesentlichen universelle Verwischung von Störpeaks, also insbesondere mit Bezug auf interne und externe Störquellen möglich.

Alternativ oder zusätzlich ist es auch möglich, dass bei einem nicht beanspruchten Verfahren die Variation der Sendedauer durch eine Variation einer Schaltwandlerfrequenz für die Reihe der Sendepulsfolgen erzeugt wird. Dabei handelt es sich um eine spezifische Verbesserung gegen fahrzeuginterne Störungen, zum Beispiel ausgehend von einem Bordspannungsgerät. Die Variation der Schaltwandlerfrequenz ist deutlich einfacher regelungstechnisch durchführbar, jedoch mit geringerer Optimierungsqualität hinsichtlich externer Störquellen.

Ebenfalls Gegenstand der vorliegenden Erfindung ist eine Vorrichtung zur Durchführung eines Verfahrens zur Bestimmung wenigstens eines Parameters zur Korrelation zweier Objekte, insbesondere des Abstandes und/oder der Relativgeschwindigkeit der zwei Objekte gemäß der vorliegenden Erfindung. Dementsprechend bringt eine erfindungsgemäße Vorrichtung die gleichen Vorteile mit sich, wie sie ausführlich mit Bezug auf ein erfindungsgemäßes Verfahren erläutert worden sind.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Figur 1: eine Darstellung einer Reihe von Sendepulsfolgen, und
- Figur 2: eine Draufsicht einer Fahrsituation mit Einsatz eines erfindungsgemäßen Verfahrens.

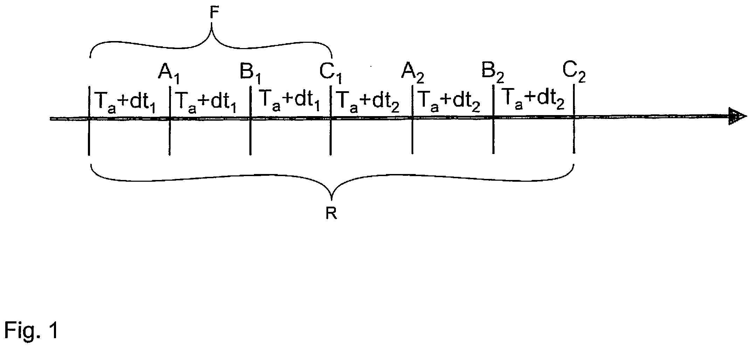

In Fig. 1 ist eine Ausführungsform eines erfindungsgemäßen Verfahrens dargestellt. Dabei wird eine erste Sendepulsfolge F, bestehend aus drei einzelnen Sendepulsen A₁, B₁ und C₁, gesendet. Diese Sendepulsfolge wird kontinuierlich wiederholt, wobei in Fig. 1 nur die erste Wiederholung mit den einzelnen Sendepulsen A₂, B₂ und C₂ angegeben ist. Die einzelnen Sendepulsfolgen F addieren sich zusammen zu einer Reihe R von Sendepulsfolgen F.

Im Rahmen der vorliegenden Erfindung dient das erfindungsgemäße Verfahren dazu die einzelnen Sendepulsfolgen zueinander hinsichtlich der Sendedauer der Sendepulse zu verändern. So sind beispielsweise in der ersten Sendepulsfolge F die einzelnen Sendedauern, bezeichnet mit Tₐ als Basisdauer für alle Sendepulsfolgen, und für alle Sendepulse gleich. Jedoch wird zu dieser Basisdauer Tₐ innerhalb der ersten Sendepulsfolge F jeweils eine Zusatzdauer dt₁ dazugezählt. Bei der zweiten Sendepulsfolge F wird eine zweite Zusatzdauer dt₂ dazugezählt. Die Zusatzdauer dt₁ und dt₂ unterscheiden sich voneinander. Sie werden insbesondere durch die Verwendung eines vorgegebenen Variationsprofils und/oder durch das Einsetzen eines Zufallsgenerators erzeugt. Dies führt dazu, dass die einzelnen Sendedauern der einzelnen Sendepulse innerhalb einer Sendefolge F identisch sind, sich aber über die Sendepulsfolgen übergreifend voneinander unterscheiden. Damit wird eine Unschärfe bzw. ein Rauschen erzeugt, durch welches Störpeaks in Form von singulär auftretenden Störquellen bei der Auswertung des Frequenzbandes ebenfalls verrauschen und keinen Falschalarm mehr auslösen können.

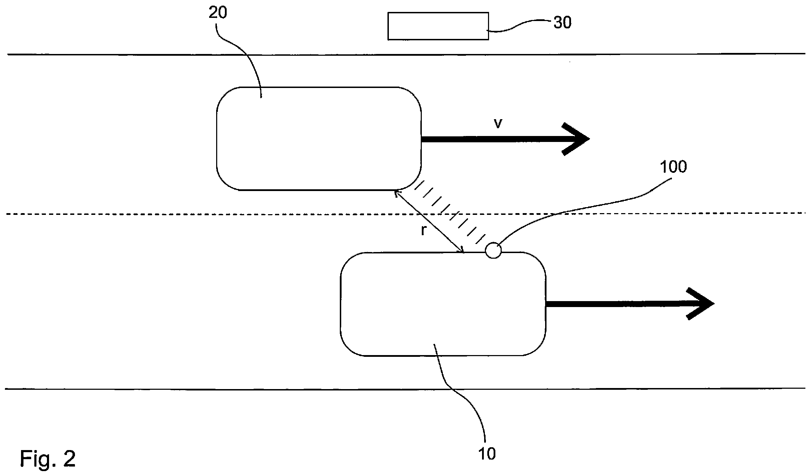

In Fig. 2 ist eine Situation dargestellt, bei welcher ein erfindungsgemäßes Verfahren für zwei Objekte 10 und 20 eingesetzt werden kann. Ein erstes Objekt 10 ist beispielsweise ein Fahrzeug, welches mit einer Überwachung für die Nachbarfahrbahn ausgestattet ist. Hierfür ist eine Vorrichtung 100 vorgesehen, die auch für die Ausführung eines erfindungsgemäßen Verfahrens eingerichtet ist. Dafür werden elektromagnetische Signale ausgesendet, die in Form von einzelnen Sendepulsen schematisch als kleine Striche ausgehend von der Vorrichtung 100 in Fig. 2 dargestellt sind. Anhand der Reflexion und der Auswertung dieser einzelnen Sendepulse erfolgt in dem ersten Objekt 10 eine Auswertung hinsichtlich des Abstandes r und/oder der Geschwindigkeit v des zweiten Objektes 20. Dabei geht es insbesondere um den relativen Abstand und die Relativgeschwindigkeit zwischen den beiden Objekten 10 und 20. Neben der Fahrbahn findet sich schematisch dargestellt eine Störquelle 30, die zum Beispiel der Sendemast eines Funknetzes sein kann. Dieser Sendemast als Störquelle 30 würde bei Vorrichtungen 100 gemäß Stand der Technik dazu führen, dass ein einzelner Peak möglicherweise eine Falschmeldung erzeugt, obwohl sich überhaupt kein zweites Objekt 20 auf der Nachbarfahrbahn zum ersten Objekt 10 befindet. Durch ein erfindungsgemäßes Verfahren wird ein Verrauschen des Ergebnisses dahingehend erzielt, dass dieser Störpeak ebenfalls verwischt und eine Falschmeldung unterbleibt. Die Akzeptanz eines solchen Systems bzw. einer solchen Vorrichtung 100 liegt deutlich höher, da Fehlmeldungen für den Fahrer weiterstgehend unterdrückt werden können.

Die voranstehende Beschreibung der Ausführungsbeispiele diskutiert die vorliegende Erfindung nur im Rahmen von Beispielen. Selbstverständlich können einzelne Merkmale und Details der Ausführungsformen, sofern technisch sinnvoll, frei miteinander kombiniert werden, ohne den Rahmen der vorliegenden Erfindung zu verlassen.

### Bezugszeichenliste

- 10: Erstes Objekt
- 20: Zweites Objekt
- 30: Störquelle
- 100: Vorrichtung

- r: Abstand
- v: Relativgeschwindigkeit

- A: Sendepuls
- B: Sendepuls
- C: Sendepuls
- F: Sendepulsfolge
- R: Reihe von Sendepulsfolgen
- dt: Zusatzdauer
- T: Basisdauer

## Patentansprüche

1. Verfahren zur Bestimmung wenigstens eines Parameters zur Korrelation zweier Objekte (10, 20), in Form des Abstandes (r) und/oder der Relativgeschwindigkeit (v) und/oder von Relativwinkeln der zwei Objekte (10, 20), wobei eine Mehrzahl von aufeinander folgenden Sendepulsfolgen mit jeweils mindestens einem Sendepuls eines elektromagnetischen Signals eine Reihe von kontinuierlich aufeinander folgenden Sendepulsfolgen bildet, wobei der mindestens eine Sendepuls als ein Sendeabschnitt mit einer Sendedauer eines im Wesentlichen konstanten elektromagnetischen Signals mit einer konstanten oder sich verändernden Frequenz ausgesendet wird, wobei die Sendedauer der einzelnen Sendepulse von Sendepulsfolge zu Sendepulsfolge variiert wird, um die Störanfälligkeit bei der Bestimmung des wenigstens einen Parameters zu reduzieren, und wobei jede Sendepulsfolge wenigstens zwei Sendepulse aufweist, so dass eine exakte Berechnung der Parameter Abstand und/oder Geschwindigkeit möglich ist,
**dadurch gekennzeichnet, dass** die Variation der Sendedauer durch Addition einer variierten Zusatzdauer zu einer festen Basisdauer erzeugt wird.

2. Verfahren nach Anspruch 1, **dadurch gekennzeichnet, dass** jede Sendepulsfolge die gleiche Anzahl von Sendepulsen aufweist.

3. Verfahren nach Anspruch 1 oder 2, **dadurch gekennzeichnet, dass** die Zusatzdauer mit Hilfe eines Zufallsgenerators, insbesondere zwischen vorgegebenen Grenzen, variiert wird.

4. Verfahren nach Anspruch 3, **dadurch gekennzeichnet, dass** die Zusatzdauer über ein vorgegebenes Variationsprofil, insbesondere zwischen vorgegebenen Grenzen, variiert wird.

5. Verfahren nach einem der vorangegangenen Ansprüche, **dadurch gekennzeichnet, dass** die Art der Variation der Sendedauer der einzelnen Sendepulse nach einer Mehrzahl von Reihen von Sendefolgen verändert wird.

6. Vorrichtung (100) zur Durchführung eines Verfahrens zur Bestimmung wenigstens eines Parameters zur Korrelation zweier Objekte (10, 20), insbesondere des Abstandes (r) und/oder der Relativgeschwindigkeit (v) der zwei Objekte (10, 20), nach einem der Ansprüche 1 bis 5.

## Claims

1. Method for determining at least one parameter for correlating two objects (10, 20) in the form of the distance (r) and/or the relative velocity (v) and/or of relative angles of the two objects (10, 20), where a plurality of consecutive transmission pulse sequences each with at least one transmission pulse of an electromagnetic signal forms a series of transmission pulse sequences continually following each other, where the at least one transmission pulse is transmitted as a transmission segment with a transmission duration of an essentially constant electromagnetic signal with a constant or changing frequency, where the transmission duration of the individual transmission pulses is varied from transmission pulse sequence to transmission pulse sequence in order to reduce the susceptibility to interference in determining the at least one parameter and where each transmission pulse sequence features at least two transmission pulses so that an exact calculation of the parameter of distance and/or velocity is possible
**characterized in that** the variation in transmission duration is generated by adding a varied additional duration to a fixed base duration.

2. Method in accordance with Claim 1 **characterized in that** each transmission pulse sequence features the same number of transmission pulses.

3. Method in accordance with Claim 1 or 2, **characterized in that** a random generator is used to vary the additional duration, in particular between specified boundaries.

4. Method in accordance with Claim 3, **characterized in that** the additional duration is varied over a specified variation profile, in particular between specified boundaries.

5. Method in accordance with one of the previous claims, **characterized in that** the manner of variation of the transmission duration of the individual transmission pulses is changed after a plurality of series of transmission sequences.

6. Device (100) for implementing a method for determining at least one parameter for correlating two objects (10, 20), in particular the distance (r) and/or the relative velocity (v) of the two objects (10, 20), in accordance with one of Claims 1 through 5.

## Revendications

1. Procédé de détermination d'au moins un paramètre pour la corrélation de deux objets (10, 20), sous la forme de la distance (r) et/ou de la vitesse relative (v) et/ou d'angles relatifs des deux objets (10, 20), plusieurs séquences d'impulsions d'émission successives avec chacune au moins une impulsion d'émission d'un signal électromagnétique formant une série de séquences d'impulsions d'émission se succédant en continu, au moins une impulsion d'émission étant émise sous la forme d'une section d'émission avec une durée d'émission d'un signal électromagnétique sensiblement constant avec une fréquence constante ou variable, la durée d'émission des différentes impulsions d'émission variant d'une séquence d'impulsions d'émission à l'autre afin de réduire la sensibilité aux perturbations lors de la détermination d'au moins un paramètre et chaque séquence d'impulsions d'émission présentant au moins deux impulsions d'émission, de sorte qu'un calcul exact des paramètres distance et/ou vitesse est possible,
**caractérisé en ce que** la variation de la durée d'émission est générée en ajoutant une durée supplémentaire variable à une durée de base fixe.

2. Procédé selon la revendication 1, **caractérisé en ce que** chaque séquence d'impulsions d'émission présente le même nombre d'impulsions d'émission.

3. Procédé selon la revendication 1 ou 2, **caractérisé en ce que** la durée supplémentaire varie en suivant un générateur aléatoire, en particulier entre des limites prédéterminées.

4. Procédé selon la revendication 3, **caractérisé en ce que** la durée supplémentaire varie selon un profil de variation prédéterminé, en particulier entre des limites prédéterminées.

5. Procédé selon l'une des revendications précédentes, **caractérisé en ce que** le type de variation de la durée d'émission des différentes impulsions d'émission est modifié après plusieurs séries de séquences d'émission.

6. Dispositif (100) pour la mise en œuvre d'un procédé de détermination d'au moins un paramètre de corrélation de deux objets (10, 20), en particulier de la distance (r) et/ou de la vitesse relative (v) des deux objets (10, 20), selon l'une des revendications 1 à 5.
